# EUROPEAN PATENT APPLICATION

(11) **EP 2 592 402 A1**
(43) Date of publication of application: **15.05.2013**
(21) Application number: 12189880.3
(22) Date of filing: 25.10.2012
(51) Int. Cl.: G01J 5/60

(54) **Determination of component temperature**

(30) Priority: 10.11.2011 GB 201119364
(71) Applicant: Rolls-Royce plc, London SW1E 6AT (GB)
(72) Inventor: Hughes, Michael, Derby, Derbyshire DE65 6BT (GB); Danvers, Thomas, Wirksworth, Derbyshire DE4 4EZ (GB); Bullock, Stuart, Derby, Derbyshire DE56 4DT (GB); Bird, Colin, Derby, Derbyshire DE24 8QD (GB)
(74) Representative: Yeomans, Victoria Jane Anora

(57) **Abstract**

A method of determining a temperature experienced by a region of a component comprising the steps of:
i) providing a component with a temperature sensitive detection material in a first state and exhibiting a first chemical characteristic prior to its exposure to a thermal environment;
ii) exposing the component to a thermal environment such that the detection material is converted to a different state in which at least one region of the detection material exhibits at least one chemical characteristic different to the first chemical characteristic;
iii) identifying at least one region of the component in which the detection material exhibits the at least one chemical characteristic which is different to the first chemical characteristic; and
iv) determining the temperature experienced by the component in the or each region by relating the detection material chemical characteristic in the or each region to a temperature value by reference to a correlation of detection material chemical characteristic and temperature.

## Description

The present disclosure relates to a method of determining a temperature experienced by a region of a component.

It is desirable to determine temperatures experienced by engines and other machinery during their operation. This may be done with sensors which monitor temperature during operation of the machinery. Alternatively temperature sensitive coatings may be applied to one or more components under scrutiny.

Such coatings are known as thermal paints, temperature indicating paints or irreversible temperature indicating paints. These coatings are usually interpreted manually by eye, as described, for example, in US 6434267. The described procedure is time consuming and highly dependent on the subjective colour reception of the operator. US 6434267 describes a complex electronic system for interpreting material colour changes in order to determine temperature experienced by a component. This system relies on reading colours which may be contaminated or otherwise affected by exposure to an operational machine environment, for example pollutants which may stain or become attached to the component surface.

Hence a method for determining the temperature experienced by a component which is less sensitive to contamination of the coating is highly desirable.

### Summary

Accordingly there is provided a method of determining a temperature experienced by a region of a component, the method comprising steps of:
i) providing a component with a temperature sensitive detection material, the detection material being in a first state and exhibiting a first chemical characteristic prior to exposure to a thermal environment;
ii) exposing the component to a thermal environment such that the detection material is converted to a different state in which at least one region of the detection material exhibits at least one chemical characteristic different to the first chemical characteristic;
iii) identifying at least one region of the component where the detection material exhibits the at least one chemical characteristic different to the first chemical characteristic;
iv) determining the temperature experienced by the component in the oreach region by relating the detection material chemical characteristic in the or each region to a temperature value by reference to a correlation of detection material chemical characteristic and temperature.

Accordingly there is also provided a system for determining a temperature experienced by a region of a component, the component provided with a temperature sensitive detection material, the detection material being in a first state and exhibiting a first chemical characteristic prior to exposure to a thermal environment; and which in use is exposed to a thermal environment such that the detection material is converted to a different state in which at least one region of the detection material exhibits at least one chemical characteristic different to the first chemical characteristic; the system comprising: a detector for identifying the different chemical characteristic(s) of the detection material following exposure of the component to the thermal environment, and a processor for determining the temperature experienced by the component in the or each region by relating the detection material chemical characteristic in the or each region to a temperature value by reference to a correlation of detection material chemical characteristic and temperature; wherein the or each chemical characteristics of the detection material are identified at room temperature.

Hence there is provided a method for determining the temperature experienced by a component coated with thermally sensitive paint which examines the change in chemical composition of the paint and is independent of the visible colour of the paint.

### Brief Description of the Drawings

Examples of the present disclosure will now be described with reference to the accompanying drawings, in which:
Figure 1 is a diagrammatic representation of a component with a detection material applied prior to exposure to a thermal environment;
Figure 2 is a shows diagrammatic representation of an analysis equipment component used for the analysis of the component; and
Figure 3 is a diagrammatic representation of the component of Figure 1 with a detection material applied post exposure to a thermal environment.

### Detailed Description

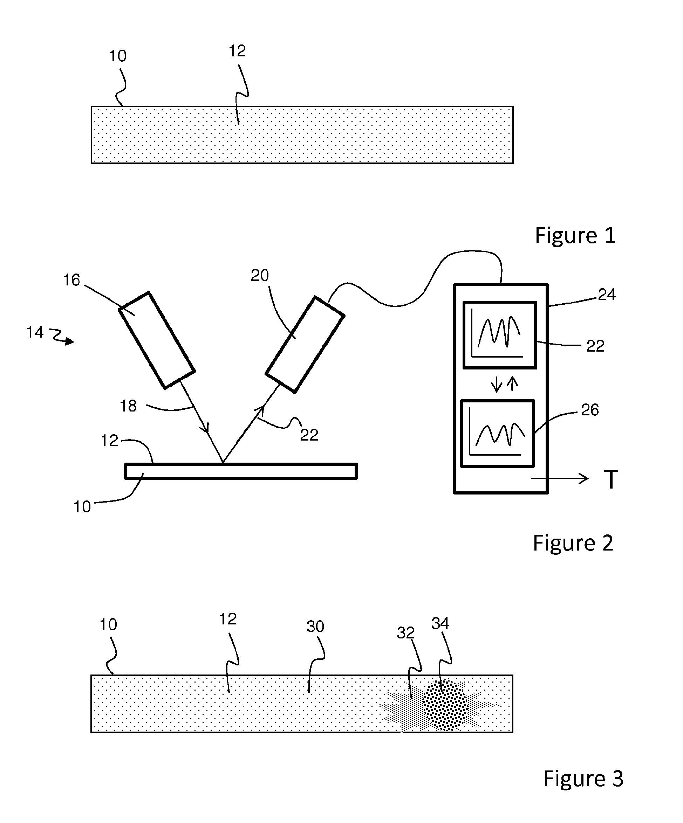

Shown in Figure 1 is a component 10 with a temperature sensitive detection material coating 12 applied to it. The detection material coating 12 has a substantially consistent composition over the area it is applied. In the example shown the detection material coating 12 is applied to the whole of the component 10. In alternative examples the coating 12 may be applied to a selected region of the component 10, but not the whole of the component 10. The detection material 12 may be a thermal paint configured to permanently change from a first state having a first chemical composition to a different state having a different chemical composition at a known temperature. That is to say the detection material 12 may be a thermal paint configured to undergo a permanent change in chemical composition at a known temperature.

Shown in Figure 2 is a representation of a system 14 for identifying chemical characteristic(s) of the detection material 12. The system 14 comprises a laser 16 for directing coherent light 18 of a specific wavelength to the surface of the coated component 10, and a detector 20 for the detection of spectra 22 emitted from the surface of the coated component 10. The spectra 22 is indicative of a chemical characteristic of the detection material 12. The detector 20 is linked to a processor 24 (e.g. computer). The processor 24 is configured to relate the spectra 22 (i.e. the chemical characteristic) to a temperature value T by reference to a correlation 26 of detection material chemical characteristic and temperature T. The system 14 is operable at room temperature. The detector may comprise a RAMAN spectrometer.

The system 14 described above may be used as part of a method to determine a temperature experienced by a region of a component 10. As described above, the component 10 is first provided with a temperature sensitive detection material 12. The detection material 12 is in a first state and exhibits a first chemical characteristic 30 prior to exposure to a thermal environment. In Figure 1 the first chemical characteristic 30 is presented diagrammatically as an evenly distributed dotted pattern. The term *"thermal environment"* is used to mean a location where the component 10 is exposed to heat. For example, if the component 10 is an engine component, the component 10 may be located in its normal operating location and the engine run to a set of conditions to expose the component 10 to operational the range and gradient of temperatures.

The component 10, once in position, is then exposed to the thermal environment such that the detection material 12 may be converted to a different state in which at least one region of the detection material 12 exhibits at least one chemical characteristic 32 different to the first chemical characteristic 30. In the example shown in Figure 3, the detection material exhibits two chemical characteristics, identified as 32, 34, which are different to the first chemical characteristic 30. The analysis system 14 scans over the surface of the component 10 and the data obtained is used to identify a region 32 or regions 32,34 of the component 10 where the detection material exhibits chemical characteristics different to the first chemical characteristic. The chemical characteristic is determined by using a Spectroscopy technique to analyse the chemical composition of the detection material 12. The detector 20 communicates the spectra 22 obtained for the different regions to the processor 24 and determines the temperature experienced by the component 10 in the or each region 32,34 by relating the detection material chemical characteristic 30,32,34 in the or each region to a temperature value T by reference to the correlation 26 of detection material chemical characteristic 30,32,34 and temperature T. The value of the temperature may be output in some suitable form.

In examples where a plurality of regions 32,34 of the component 10 are analysed, a thermal map is produced which indicates the range of temperatures T experienced by the component 10. The method, and system, are operable at room temperature. That is to say the or each characteristics 30,32,34 of the detection material 12 are identified at room temperature. Hence the method and system are intended for examining the component when the engine is non operational. The component may be examined in situ, for example using boroscope equipment to deliver the laser and detect emitted light. Alternatively the component may be removed from the engine for analysis.

The correlation 26 of detection material chemical characteristic 30,32,34 and temperature T is predetermined and comprises a library, database, look up table and/or algorithm.

The algorithm may be derived using a machine learning supervised classifier type technique trained using a library of detection material samples pre-heated to known temperatures. A description of such techniques can be found in Pattern Recognition and Machine Learning by Christopher M. Bishop (Published in 2007 by Springer, ISBN-13: 978-0387310732).

The correlation 26 may be derived from at least one detection material sample heated to a known temperature under controlled conditions to provide a calibration sample. For example a plurality of calibration coupons (i.e. the "samples") are coated with a specific thermal paint. The coupons are then exposed to a variety of temperatures (e.g. at 10°C intervals) for known exposure times (eg 2,5,10,30 and 60 minutes), chosen to cover the intended operating conditions of the paint. As the irreversible chemical reaction, which results in a calibratable colour change in the paint, is dependent on both temperature and duration at temperature the calibration process produces a range of possible outcomes from thermal exposure. Once the coupons have returned to room temperature a Raman spectra is captured from each and grouped together under the duration of exposure. This process captures the changes in the chemical compounds present in the paint as the paint is exposed to increasing temperatures, which is represented by changes in features present in the Raman spectra.

The inventors have found that some temperature sensitive detection material compositions produce a clearer Raman Spectra than others, which is due to their different chemical compositions. There are two main mechanisms which control how well a specific detection material responds. The first is the intensity of Raman response from the detection material. The resulting Raman response must be of sufficient intensity to be observed over noise present in the spectra. That is to say, a Raman response produced by a specific compound may change with temperature, but may be too weak to be clearly distinguished from spectra produced by the other compounds present in the detection material, or the general signal noise inherent in the method. If this is the case, then analysis to determine chemical change, and hence temperature, may be unachievable. The second mechanism is the fluorescent response of some compounds, which releases a large amount of photons that swamp the detector and prevent in the Raman spectra from being observed. The fluorescent response can be avoided by increasing the laser frequency, however doing so may reduce the intensity of the Raman response, thus interfering with the first mechanism described above. Of the available range of temperature sensitive detection material those preferred contain compounds which produce a better Raman response or contain less compounds which produce a fluorescent response.

For a temperature sensitive detection material described in European Patent Number EP1288267 (Rolls-Royce plc) the use of a laser wavelength of 633nm produces an acceptable Raman response.

For a temperature sensitive detection material described in European Patent Number EP1288266 (Rolls-Royce plc) the use of a laser wavelength of 785nm produces an acceptable Raman response.

A temperature sensitive detection material comprising lead and calcium carbonate produce an acceptable Raman response when exposed to wavelengths of 633nm (for example He-Ne), 830nm and/or 1064nm (for example Nd:YAG).

Hence the method and system described above enables a technique of examining thermal paints change in chemical composition, rather than their change in colour, to reveal the temperature experienced by the component.

The method and system herein described is a non-destructive technique, and this has the advantage of being able to identify trace amounts of chemicals without compromising or polluting the chemicals on the component 10.

## Claims

1. A method of determining a temperature experienced by a region of a component (10), the method comprising steps of:
i) providing a component (10) with a temperature sensitive detection material (12), the detection material (12) being in a first state and exhibiting a first chemical characteristic (30) prior to exposure to a thermal environment;
ii) exposing the component (10) to a thermal environment such that the detection material (12) is converted to a different state in which at least one region of the detection material (12) exhibits at least one chemical characteristic (32,34) different to the first chemical characteristic (30);
iii) identifying at least one region of the component (10) where the detection material (12) exhibits the at least one chemical characteristic (32,34) different to the first chemical characteristic (30);
iv) determining the temperature experienced by the component (10) in the or each region by relating the detection material chemical characteristic (32,34) in the or each region to a temperature value by reference to a correlation (26) of detection material chemical characteristic (30,32,34) and temperature.

2. The method of claim 1, wherein the detection material (12) is provided in a coating applied to the component (10).

3. A method as claimed in claim 2 wherein the detection material (12) is a thermal paint configured to undergo a permanent change in chemical composition at a known temperature.

4. A method as claimed in claim 3 wherein the detection material (12) is a thermal paint configured to permanently change from a first state having a first chemical composition to a different state having a different chemical composition at a known temperature.

5. A method as claimed in any one of the preceding claims wherein the characteristic (30,32,34) is determined by using a Spectroscopy technique to analyse the chemical composition of the detection material (12).

6. A method as claimed in claim 5 wherein the Spectroscopy technique is RAMAN spectroscopy.

7. A method as claimed in any one of the preceding claims wherein a plurality of regions of the component (10) are analysed to produce a thermal map indicating the range of temperatures experienced by the component (10).

8. A method as claimed in any one of the preceding claims, wherein the or each characteristics (30,32,34) of the detection material (12) are identified at room temperature.

9. A method as claimed in any one of the preceding claims wherein the correlation (26) of detection material chemical characteristic (30,32,34) and temperature is predetermined and comprises a library, database, look up table and/or algorithm.

10. A method as claimed in claim 9 wherein the correlation (26) is derived from at least one detection material sample heated to a known temperature.

11. A system (14) for determining a temperature experienced by a region of a component (10), the component (10) provided with a temperature sensitive detection material (12), the detection material (12) being in a first state and exhibiting a first chemical characteristic (30) prior to exposure to a thermal environment; and which in use is exposed to a thermal environment such that the detection material (12) is converted to a different state in which at least one region of the detection material (12) exhibits at least one chemical characteristic (32,34) different to the first chemical characteristic (30);
the system (14) comprising: a detector (20) for identifying the different chemical characteristic(s) (30,32,34) of the detection material (12) following exposure of the component (10) to the thermal environment, and a processor (24) for determining the temperature experienced by the component (10) in the or each region by relating the detection material chemical characteristic (30,32,34) in the or each region to a temperature value by reference to a correlation (26) of detection material chemical characteristic (30,32,34) and temperature; wherein the or each chemical characteristics (30,32,34) of the detection material (12) are identified at room temperature.

12. A system (14) as claimed in claim 11 where the detector (20) comprises a RAMAN spectrometer.

13. A system (14) as claimed in claim 11 or claim 12 where the detection material (12) is a thermal paint configured to permanently change from a first state having a first chemical composition to a different state having a different chemical composition at a known temperature.
